Europäisches Patentamt

European Patent Office

Office européen des brevets

(11) Publication number: **0 221 240**
A2

## (12) EUROPEAN PATENT APPLICATION

(21) Application number: 86109509.9

(22) Date of filing: 11.07.86

(51) Int. Cl.⁴: **H 02 P 5/41**
G 05 D 15/01

(30) Priority: 11.07.85 US 754377

(43) Date of publication of application:
13.05.87 Bulletin 87/20

(84) Designated Contracting States:
DE FR GB IT NL SE

(71) Applicant: **WESTERN GEAR MACHINERY CO.**
2100 West Marine View Drive
Everett Washington 98201(US)

(72) Inventor: **Sheppard, Monte G.**
1506 26th St. Apt. No. 3
Everett Washington 98201(US)

(74) Representative: **Patentanwälte Grünecker, Kinkeldey,
Stockmair & Partner**
Maximilianstrasse 58
D-8000 München 22(DE)

(54) Tension control.

(57) Pulse width modulated inverter-type controls are used in connection with a.c. motors as a variable-speed drive for constant tension applications. The controllers are of the type in which a vector analyzer system is utilized to determine the appropriate relationship between the frequency and the voltage applied to the motors. The control further includes circuitry for altering the normal voltage and frequency relationship below a selectable minimum frequency to account for low-speed characteristics. The low-speed control is further modified in tension controlled applications. When the motor is running in a pay out, or regeneration mode, in the transition form low-speed control to high-speed control, the controller signals are modified to increase motor torque at the transition and a signal representing the rate of change of the angle between the vectors in the vector analyzer circuitry is attenuated.

FIG. 1

EP 0 221 240 A2

## Description

## TENSION CONTROL

### Technical Field

The invention relates to speed/tension feedback control system, tension controls for pipe and cable tensioners and hoists utilizing pulse width modulated inverters for motor drive control.

### Background of The Invention

Variable speed A.C. motor controls have difficulty controlling motors in applications below 10% of synchronous speed.

Recently developed controls have been made available which will, under certain conditions, operate below 10% of synchronous speed. Such controls are available through Siemens-Allis, Inc. of South Plainfield, New Jersey, U.S.A. The controls are of a type referred to as constant voltage, d.c. link converters which are used with three phase synchronous or squirrel cage, a.c. motors. Such controls are represented by the Simovert P model controller available from Siemens-Allis, Inc. The inverter circuitry and controls are described in electrical instruction document No. X-2924, Sections 1-9 and instruction Document C-143-D/L-AC-PWM-SIEMENS-VER.1 and drawings 3GE 473 001.9006.01 SP, sheets 1-43. These controls use a pulse width modulated inverter to control the supply of power to the motors. These controls were developed for use with excavating equipment such as shovels and draglines made by Bucyrus-Erie Co. of South Milwaukee, Wisconsin. Such equipment utilizes motors of 1300 to 2000 H.P. and a speed rather than tension feedback control system.

Basically, pulse width modulated (PWM) inverters require two commands in their primary control scheme;

voltage and frequency. The voltage and frequency commands are, usually, analog voltages which tell the actual PWM firing circuits how rapidly to fire and how many pulses per half-sine wave to provide and what pulse-width to use.

The controller includes a vector analyzer which computes the appropriate voltage command by assuming the required motor voltage to be composed of the vector sum of two voltages which are always 90 degrees apart. This allows calculation of the appropriate vector magnitude by the simple square-root of the sum-of-the-squares procedure used for finding the hypotenuse of a right triangle. The approximation works for speed (frequency) ranges from 10% to 100% of motor rating. Below 10% of motor speed the approach is invalid. A technique called "electronic resistance" is used below a selectable control point called "minimum frequency", $f_{min}$, which is normally 10% of the rated speed. The electronic resistance stretches portions of the two summation vectors, producing a larger voltage command in this region. The factor, K, by which these portions are stretched is experimentally determined for each system. The K factor is not instantaneously available at exactly 10% speed, rather it is "ramped" in by a K-ramp circuit. The rate in milliseconds by which K is ramped (it is actually not available until completion of the ramp time) affects stability of the motor current control as does the magnitude of the K effect.

The PWM controls have been applied by the inventor to constant tension, variable speed applications, in particular pipe and cable tensioners and hoists.

In the process of applying the PWM controls to linear pipe and cable tensioners, a suitable K factor allowing performance below 10% speed was established for certain lightly loaded highly dynamic conditions. However, there were some unusual difficulties with the system fully loaded. Under certain conditions the control would not work. On the very large hoist motors of the B-E excavators, a single value for the K factor can be found which is satisfactory for all circumstances (particularly with the help of a signal identified as the alpha-derivative signal)

It became apparent that the smaller motors of the electric tensioner, motors from 360 to 500 H.P., had to have different K values at certain speeds for each direction of motor loading, motoring or generating. Additionally, the alpha-derivative signal was negatively affecting the operation in certain circumstances.

The problem which occurred was that the motors lost control of the load when lowering or paying out; motor current went too high. This causes the inverter to "trip out" on overcurrent as the system was making the transition from motoring to generating and the speed was increasing from the low speed control to high speed control. The situation always occurred when the transition speed was slow, but was not as much of a problem when the transition speed was rapid.

Disclosure of The Invention

Pulse width modulated inverter-type controls are used in connection with a.c. motors as a variable-speed drive for constant tension applications. Such constant tension applications include tension feedback controlled pipe tensioners, cable tensioners and hoists. The motor controls of the constant voltage d.c. link, converter type, are used to control the supply of power to one or more three-phase a.c. synchronous or squirrel cage motors. The controllers are of the type in which a vector analyzer system is utilized to determine the appropriate relationship between the frequency and the voltage applied to the motors. The control further includes circuitry for altering the normal voltage and frequency relationship below a selectable minimum frequency to account for the change in motor characteristics at low speed. This modification technique, termed electronic resistance, is further modified in tension controlled applications. In such applications, when the motor is running in a pay out, or regeneration, mode, in the transition from low-speed control to high-speed control, the controller signals are modified to increase motor torque at the transition. The controller generates a signal representing the rate of change of the angle between the vectors in the vector analyzer circuitry during low-speed operation. During the regeneration mode operation, on transition from the low-motor speed control to high-motor speed control, the angle change rate signal is also attenuated to eliminate undesirable effects.

The pulse width modulated control is used in connection with a tension control system which is responsive to the speed of the object being moved, such as the pipe, cable, or hoist cable as well as the tension of such object. The tension control system provides a speed input signal to the motor controller in response to a variance in the tension from the desired tension, either increasing or decreasing the speed of the drive motor, to return the tension to the desired value. This control system output is responsive to the speed of the object being moved so that the speed adjustment is modulated so that the rate of change in speed varies with the speed of operation.

## Brief Description of The Drawings

Figure 1 is a schematic diagram of a pulse width modulated motor controller and associated control system components used in connection with a pipe tensioner.

Figure 2 is a schematic diagram of a pulse width modulated controller and associated control system components used in connection with a hoist.

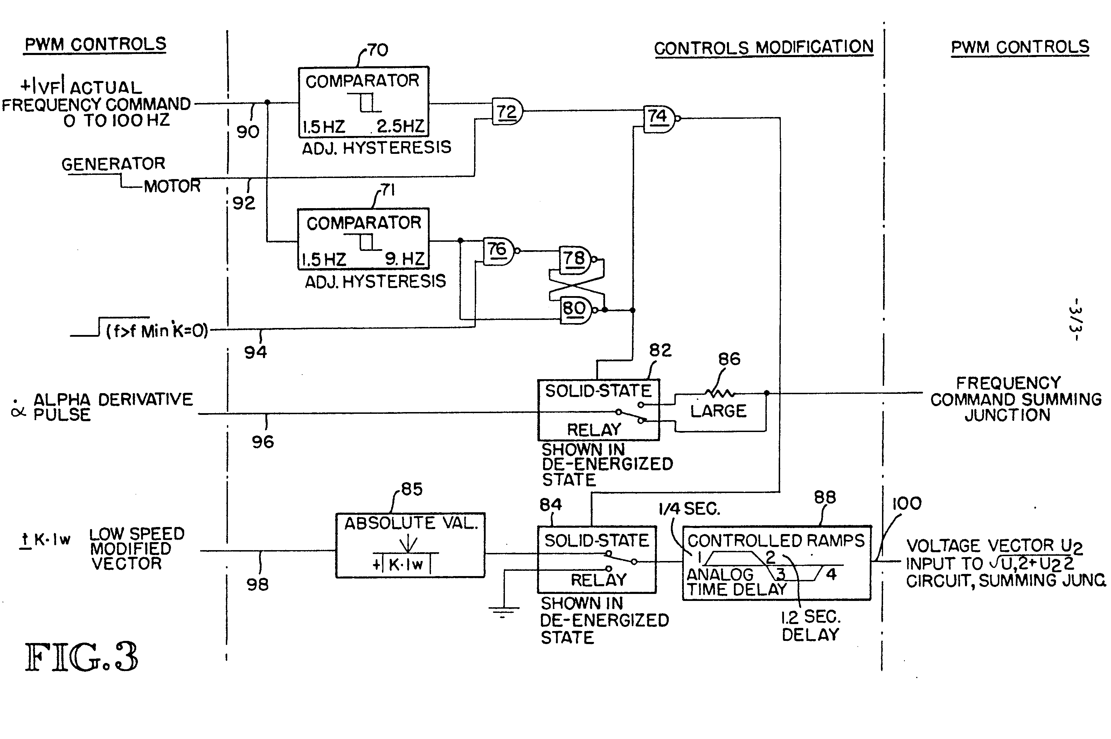

Figure 3 is a schematic diagram of a modification to the pulse width modulator controls for use in tension controlled applications.

## Best Mode for Carrying Out The Invention

A tension control for use in connection with tension control equipment, such as, pipe and cable tensioners and hoists is provided.

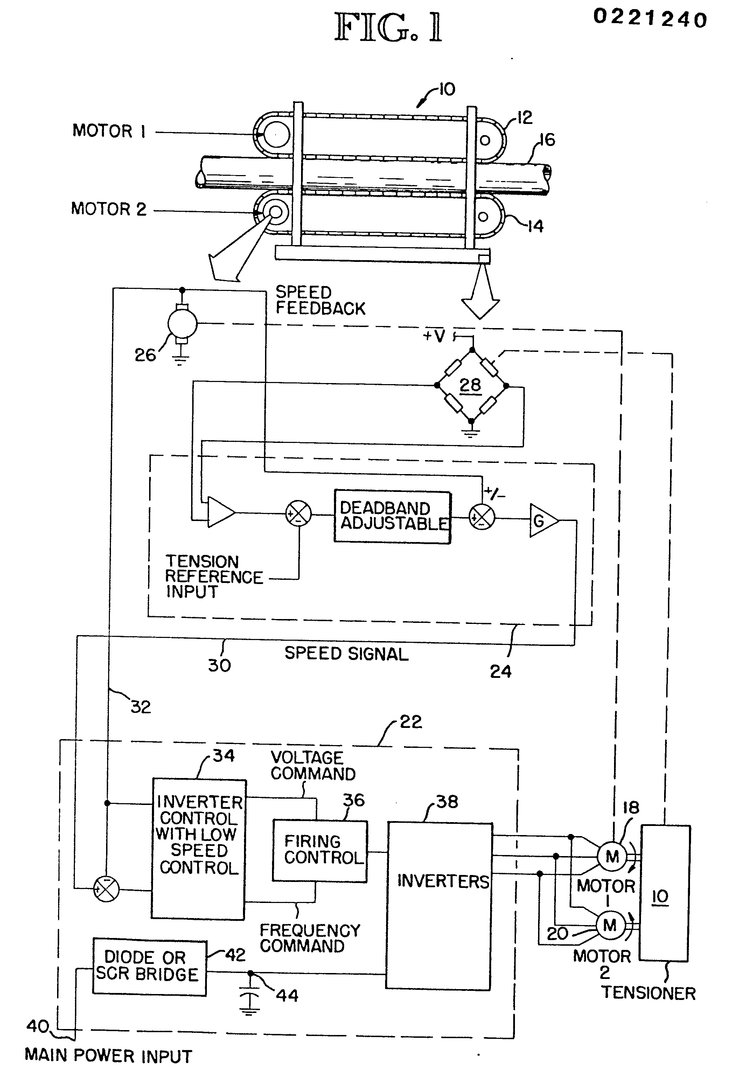

Referring to Figure 1 a tensioner of the type used for pipe or cable and its associated control system is shown in schematic form. The pipe or cable tensioner is of the type disclosed in U.S. Patent No. 3,669,329, Blanchet et al., Pipe Tensioning Unit and U.S. Patent No. 3,722,769, Aplet et al., Tension Control System. The pipe tensioner 10 has opposing tracks 12 and 14 which engage the sides of the pipe 16. The pipe tensioner is used in connection with pipe laying operations such as where the pipe extends off the end of a floating platform which is advanced along a path in order to deposit the pipe on the sea floor along a desired path. The speed of the tracks are adjusted by the control system in order to maintain the desired tension on the pipe. The speed of the tracks is increased to reduce tension and the speed of the tracks is reduced to increase tension.

Each track of the tensioner is provided with a squirrel cage, alternating current, induction motor, 18 and 20. The motors are controlled through motor control 22 used in connection with a feedback control system including controls 24 and tachometer 26 and load cell 28. The output of the tachometer corresponds to the linear speed of the pipe and the load cell output corresponds to the tension placed on the pipe by the pipe tensioner 10. The signal from the load cell is compared with the tension reference signal set by the equipment operator. An adjustable deadband is provided. The control signal is then offset by the speed signal in an amount which depends on the the speed and the direction of travel of the pipe. The result is a speed signal which is applied to the motor control 22.

The motor control 22 is a pulse width modulated (PWM) controller with low speed control. It is of the type available from Siemens-Allis, Inc. of South Plainfield, New Jersey and identified as a constant voltage, d.c. link converter. For example, the Simovert P model controller with a three-phase, 500 volt, 50/60 hertz, 360 kva rated controller, type 6 SC 3438-7NA00 for use with motors such as the Siemens-Allis, Inc., 447 T Frame, 6 pole, 460 volt, 110 kw/150 horsepower three-phase squirrel cage, induction motors.

The modified speed signal 30 and speed signal 32 from the tachometer 26 are provided to the controller.

The controller 22 includes a inverter control 34 with low speed control which provides a voltage command and frequency command to the firing control 36. The firing control controls the firing of the inverters 38. The inverters under the influence of the firing control supply AC signals to the motors 18 and 20 by converting a constant voltage DC signal supplied from the main power input 40 supplied through a diode, or SCR bridge, 42 and filter 44.

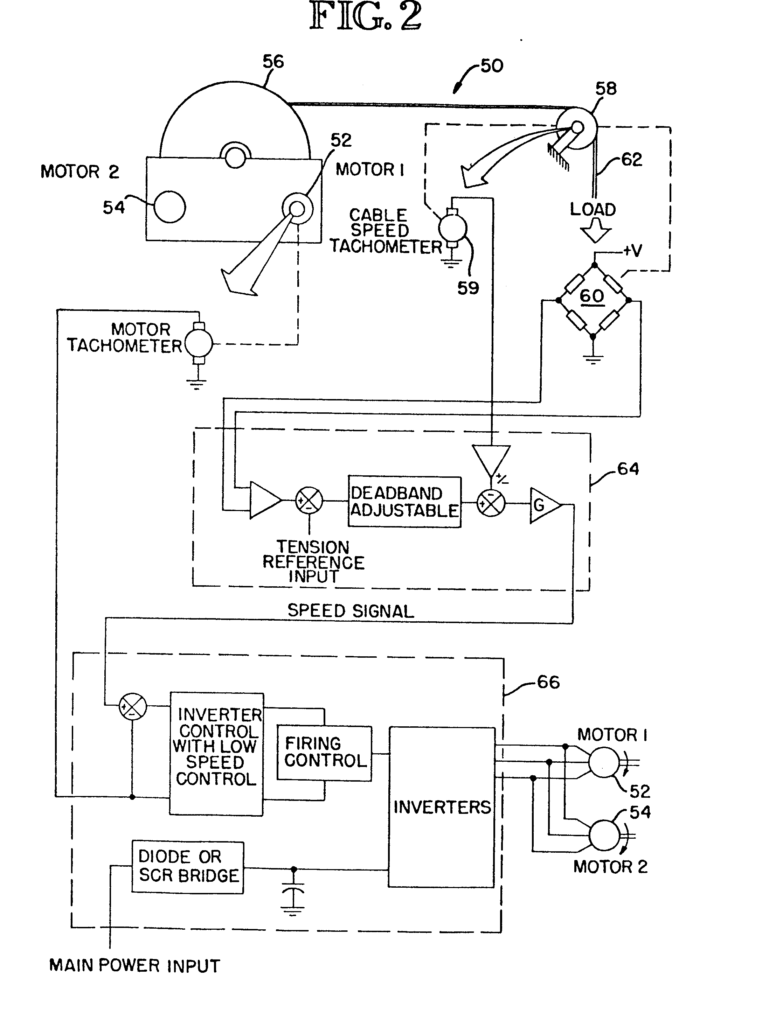

Figure 2 is an illustration of the same type of controller applied to a hoist 50. The controller controls hoist drive motors 52 and 54 which control the cable drum 56. An instrumented sheave 58 is provided with a cable speed tachometer 59 and load cell 60. The load cell which provides an output corresponding to the tension on the load support cable 62. Control 64 functions similar to controls 24 used in connection with the pipe tensioner and illustrated in Figure 1. The motor control 66 functions as motor control 22 used in connection with pipe tensioner illustrated in Figure 1. The principal difference in the control circuitry for the hoist from that of the pipe tensioner lies in the source of the speed feedback signals. In the hoist controls shown in Figure 1 the tachometer provides motor speed feedback and the speed input to controls 24. Since drive motor differ because the effective diameter of the cable depends on how much cable is wound around the drum at the time. For this reason a speed input to the motor control 66 is taken from the motor tachometer and the speed input to control 64 is taken from the cable speed tachometer 59.

In order to have the PWM controls work properly under all conditions the vector analyzer circuit contained in the inverter control section 34 was modified. The normal vector analyzer circuit contained in the control, such as the one described above is modified as shown in Figure 4. In operation the transitions from high-speed to low speed control in the regenerating mode, low-speed to high-speed control and high-speed to low-speed control in the motoring mode were adequate. However, when used with the cable or pipe tensioner smooth, trouble-free, operation is not possible in the transition from low-speed to high-speed regulation in the regenerating mode. The characteristics of the smaller motors are sufficiently different from the large hoist motors that not enough torque is developed with what appears to be the correct voltage. During rapid transitions the problem was is not as apparent since enough time is spent in the transition area that the control can frequently "catch up" with the motor before it can breakdown losing control of the load. During slow transitions, invariably the motor will breakdown, lose control of the load and cause an overcurrent trip prior to the high-speed control coming in to "catch" the load.

In order to solve the problem, the voltage to the motor needs to be increased during the troublesome transition. Further, its effect should be larger for slow transitions than fast, and it should also be current, i.e., load, dependent. The control modification consists of two analog comparators 70 and 71 with digital outputs, digital logic gates 72, 74, 76, 78 and 80 two solid state relays 82 and 84, an attenuating resistor 86, an absolute value amplifier 85 and an adjustable delay amplifier 88.

The modification will be described as implemented in a Simovert P controller of the type described above except that the rated motor frequency is 45 Hz. The input to the control modification on connection 90 represents the absolute value of the frequency demand signal located on the circuit board identified as the custom card. The input signal on connection 92 is a signal which indicates whether the motor is in the generation mode or motoring mode and is obtained from the circuit board identified as the 9215 card.

The input signal on connection 94 indicates that the frequency is above the minimum frequency and the K factor has ramped to 0. This signal is obtained from the circuit board identified as the B/E-Siemens 9214 card. The input signal on connection 96 is the alpha-derivative pulse obtained from the same circuit board as the signal on connection 94. The signal on connection 98 represents the positive or negative signal which represents the low-speed modified vector, $+/_-$ $K \cdot I_w$ and is obtained from the same circuit board as the signal on lines 94 and 96.

While the PWM controls most commonly switch to the low speed, or electronic resistance control at and below ten percent of synchronous speed; for pipe tensioning applications it is desirable to keep the high-speed control in effect until the speed reaches approximately 6.6 percent of synchronous speed.

The PWM control system parameter monitored on connection 90, the absolute value of the frequency control voltage, is monitored by the comparators 70 and 72. Comparator 70 outputs a logic high on frequencies below 1.5 hertz. The comparator is provided with hysteresis so that it will go low on reaching frequencies above 2.5 hertz. Comparator 72 outputs a logic low on frequencies below 1.5 hertz and is provided with hysteresis so that a logic high is output with frequencies above 9 hertz.

The output of comparator 70 and 72 is anded with a system parameter on connection 92 which is logic high for generating and logic low for motoring. The output of gate 72 is presented to a NAND gate controlling relay 84. The output of comparator 72 is anded and inverted with a system parameter which is high when the frequency demand is above minimum frequency and the K factor has ramped to 0. The output of 76 when true sets the RS flip-flop formed by 78 and 80. The comparator trip level is slightly lower than 1.5 hertz, allowing some difference in the point at which the two comparators change state.

When the frequency command has dropped to less than 1.5 hertz and the motors are commanded to go in the generating direction, two logic highs are presented to the NAND gate 74. The NAND gate output is low and the relay is in its quiescent state. This allows the absolute value of $K \cdot I_W$ to begin increasing through the controlled ramp amplifier 88 to increase voltage vector $U_2$ appearing at circuit output connection 100. The ramp in time is approximately 1/4 sec. As the frequency increases above 2.5 hertz the relay 84 is turned off by the change in the output of comparator 70.

The control ramp begins decreasing the effect of the signal on input 98 upon the output on connection 100 but not before the system is switched to the high-speed regulator control. The ramp out time is critical and is 1.2 sec. Note that the minimum frequency for the regulator section has been decreased to approximately 3 hertz. During rapid transitions the relay 84 is only energized for a few milli-seconds and the ramp attenuates any effect on the output on connection 100. During slow transitions the relay is on sufficiently long to build the maximum delay into the ramp circuit, so there will be some effect on the output on connection 100 even in the slowest transitions. The signal on output connection 100 is voltage vector $U_2$ which is input to the square root of $U_1{}^2 + U_2{}^2$ circuit, summing junction found in the printed circuit board identified as the B/E-Siemens 9214 card.

For the analog time delay 88 the delay on ramp 1 is approximately a quarter of a second and the delay on ramp 2 which is critical, is 1.2 seconds. Only the positive signal on the analog time delay is utilized.

A further modification affects the alpha-derivative circuit. The alpha-derivative signal represents the rate of change of the angles between the computational vectors. The alpha-derivative pulse is intercepted on input 76 and modified through the action of relay 82 and resistor 86, a 100 K ohm resistor, during the critical period. The modified output is provided on output connection 108 which is connected to the frequency command summing junction found on the printed circuit board identified as the B/E-Siemens 9216 card.

Since the motor voltage is so high upon leaving zero speed (especially in the regenative direction), the alpha-derivative pulse causes excessive current. The comparator 72 sets the RS flip-flop for higher speeds regardless of motoring/generation. When the flip-flop is set, relay 82 is de-energized, allowing the full alpha zero speed (full alpha-derivative signal application). By the time the frequency command has settled at zero speed, the flip-flop is reset energizing relay 82, shown in the de-energized state. This attenuates the alpha-derivative signal until the motor has, once again, reached higher speeds.

All signals in the circuit are from zero to ten volts d.c.

While this invention has been described in conjunction with specific embodiments of the control systems for variable speed AC motors as used with pipe tensioners, cable tensioners and hoists, it should be understood that these are merely illustrative. Numerous modifications and alterations may be made to the invention and its use without departing from the spirit and scope of the invention and it is intended that the patent shall cover whatever features of patentable novelty exist in the invention and encompassed with the following claims.

11

## Claims

1. A tension control systems for equipment for moving an object under a controlled amount of tension such as tension controlled hoists, cable tensioners, and pipe tensioners comprising;

a) an alternating current, drive motor suitable for variable speed operation;

b) a motor control responsive to input signals for varying the speed of the drive motor, said motor control including a pulse width modulated inverter control for providing power to the drive motor at variable frequency and variable voltage in response to a voltage signal and frequency signal and a voltage and frequency control system responsive to input signals; and

c) a tension control system responsive to the speed of the object and the tension providing a speed input signals to the motor controller in response to a variance in the tension from the desired tension, either increasing or decreasing the speed of the drive motor, to return the tension to the desired value including means responsive to the speed of the object being moved to modulate the speed adjustment so that the rate of change in speed varies with the speed of operation.

2. A tension control system, as claimed in claim 1, wherein the motor control comprises a constant voltage, d.c. link converter type control of the type including means for controlling the voltage and frequency of the power to the drive motor and further including means for modifying the voltage and frequency relationship below a selectable minimum frequency to modify the voltage and frequency relationship of the power to the drive motor during low speed operation to account for the change in motor characteristics at low speed.

3. A tension control system, as claimed in claim 2, wherein the voltage and frequency control system includes a voltage and frequency relationship modification means for modifying the operation of the voltage and frequency control when the motor speed is operating in the range of 6.6 percent of synchronous speed and lower.

4. A tension control system, of the type having a vector system analyzer which produces a low-speed modified vector signal to account for changes in motor control characteristics at low speed, as claimed in claim 2, wherein the vector analyzer system further includes means for increasing the low-speed modified vector signal on the transition from low speed to high speed control in the motor regenerative mode to increase drive motor torque and prevent loss of control.

5. A tension control system, as claimed in claim 1, wherein the voltage and frequency control system includes a vector analyzer system for controlling the voltage and frequency of the power to the drive motor and further including an electronic resistance control to alter the voltage and frequency relationship when the motor speed is operating in the range of 10 percent of synchronous speed and lower.

6. A tension control system of the type having a vector analyzer system which includes a signal which affects the frequency output of the frequency control and which represents the rate of change of the angle between the vectors, as claimed in claim 3, where the vector analyzer system further includes means for altering the vector angle rate of change signal during the transition from low speed to high speed operation when the drive motor is in the regenerative mode.

# FIG. 1

0221240

MOTOR 1

MOTOR 2

10

12

16

14

SPEED FEEDBACK

26

+V

28

DEADBAND ADJUSTABLE

+/-

G

TENSION REFERENCE INPUT

30

SPEED SIGNAL

24

32

22

VOLTAGE COMMAND

34

INVERTER CONTROL WITH LOW SPEED CONTROL

36

FIRING CONTROL

38

INVERTERS

18

M

MOTOR

10

20

M

MOTOR 2

TENSIONER

FREQUENCY COMMAND

DIODE OR SCR BRIDGE

42

44

40

MAIN POWER INPUT

-2/3-
# FIG. 2

0221240

FREQUENCY COMMAND SUMMING JUNCTION

VOLTAGE VECTOR U₂ INPUT TO √U₂²+U₂2² CIRCUIT, SUMMING JUNC.

CONTROLS MODIFICATION

100

CONTROLLED RAMPS

ANALOG TIME DELAY

1 2 3 4

.2 SEC. DELAY

88

86 LARGE

82 SOLID-STATE RELAY SHOWN IN DE-ENERGIZED STATE

1/4 SEC.

84 SOLID-STATE RELAY SHOWN IN DE-ENERGIZED STATE

74

72

70 COMPARATOR 1.5HZ 2.5HZ ADJ. HYSTERESIS

71 COMPARATOR 1.5HZ 9.HZ ADJ. HYSTERESIS

78 80

76

85 ABSOLUTE VAL. |K·ẇ|

90 +|v∫| ACTUAL FREQUENCY COMMAND O TO 100 HZ

92 GENERATOR MOTOR

94 (f>f Min k=0)

96 ALPHA DERIVATIVE ∝ PULSE

98 +K·ẇ LOW SPEED MODIFIED VECTOR

FIG.3